# EUROPÄISCHE PATENTSCHRIFT

(11) **EP 3 730 004 B1**
(45) Veröffentlichungstag und Bekanntmachung des Hinweises auf die Patenterteilung: **06.04.2022**
(21) Anmeldenummer: 20171160.3
(22) Anmeldetag: 23.04.2020
(51) Int. Cl.: A47F 7/00, A47F 7/28, A01G 9/02, A01G 27/02

(54) **PFLANZTOPFHALTER**
PLANT POT HOLDER
PORTE-POT POUR LA CULTURE DE PLANTES

(30) Priorität: 23.04.2019 DE 202019102283 U
(43) Veröffentlichungstag der Anmeldung: 28.10.2020
(73) Patentinhaber: Saly, Lucia, 86356 Neusäss (DE)
(72) Erfinder: Sporer, Stefan, 86356 Neusäß (DE)
(74) Vertreter: ERNICKE Patent- und Rechtsanwälte PartmbB

(56) Entgegenhaltungen:
- CN-A- 102 640 674
- CN-A- 106 069 266
- US-A1- 2002 157 308
- US-A1- 2015 121 756

## Beschreibung

Die vorliegende Offenbarung betrifft einen Pflanztopfhalter zur Aufnahme eines oder mehrerer Pflanztöpfe.

Pflanzen, insbesondere Küchenkräuter und kleinere Ziergewächse, werden häufig im Handel in einem Pflanztopf angeboten, der eine einfache Ausbildung hat. Der Pflanztopf hat häufig eine im Wesentlichen zylindrische Außenform und besteht aus einem dünnen tiefgezogenen Kunststoffmaterial. Teilweise werden auch Pflanztöpfe mit anderen Grundformen angeboten. Die Pflanztöpfe haben zumeist einen runden Kragen an der Oberkante.

Um eine gekaufte Pflanze in einer ästhetisch ansprechenden Weise anzuordnen, wird der Käufer üblicherweise die Pflanze aus dem Pflanztopf entnehmen und in ein anderes höherwertiges Gefäß umpflanzen. Alternativ kann der Käufer die Pflanze mitsamt des einfachen Kunststoff-Pflanztopfs in einen höherwertigen und ansprechenden Übertopf stellen. Der Übertopf oder das höherwertige Pflanzgefäß werden dann in der Regel auf einer ebenen Fläche abgestellt, im Fall von Küchenkräutern insbesondere auf der Küchenplatte, einem Fensterbrett oder einem Balkon- oder Terrassentisch.

Es hat sich gezeigt, dass dieses Vorgehen mit gekauften Pflanzen, insbesondere bei Küchenkräutern und kurzlebigen Ziergewächsen, für die Kunden umständlich und nicht befriedigend ist. Einerseits kauft der Kunde in der Regel nach und nach jeweils unterschiedlich aussehende Übertöpfe, so dass sich ein ästhetisch wenig ansprechendes Sammelsurium bildet und unnötig viel Platz für das Aufstellen der Pflanzen verwendet wird. Andererseits sind im Zuge der immer dichteren Besiedlung in den Städten die Wohnungen und damit auch die Küchen und Küchenarbeitsflächen immer kleiner, so dass oft nur wenig Platz zur Verfügung steht, um verschiedene Küchenkräuter aufzustellen.

Gleichzeitig steigt aktuell die Wertschätzung der Kunden für frisch zubereitete Nahrungsmittel, in denen direkt von der Pflanze geerntete Blätter, Stängel, Früchte oder sonstige Pflanzenteile verarbeitet werden.

Es besteht somit das Bedürfnis, mit möglichst wenig Zusatzaufwand eine oder mehrere gekaufte Pflanzen, insbesondere Küchen- oder Kräuterpflanzen und kurzlebige Ziergewächse, platzsparend so unterzubringen, dass deren weiteres Wachstum gefördert wird und gleichzeitig ein insgesamt ästhetisch ansprechendes Bild entsteht.

Gemäß der vorliegenden Offenbarung wird vorgeschlagen, hierfür einen zweckdienlichen Pflanztopfhalter vorzusehen.

Die bisher bekannten Pflanztopfhalter sind nicht optimal ausgebildet. Beispielsweise ist aus der EP 3 342 276 A1 eine Steige bekannt, in der eine Mehrzahl von Pflanztöpfen in einer Rasteranordnung einsetzbar ist. Die Steige muss allerdings insgesamt auf einer großen freien Fläche abgestellt werden und bietet keinen ansprechenden ästhetischen Gesamteindruck. Für den Einsatz im Privatbereich ist die Steige nicht geeignet.

WO 2007/073843 A1 offenbart eine andere Ausführungsvariante für eine Steige mit mehreren Mulden zur Aufnahme von Pflanztöpfen. Die Steige ist hier aus einem geschäumten Kunststoffmaterial gebildet und hat ein wenig ansprechendes Aussehen. Auch hier muss die Steige, in der eine Mehrzahl von Pflanztöpfen beispielsweise rasterförmig angeordnet sind, auf einer großen Fläche abgestellt werden.

Verschiedene Varianten von Übertöpfen und Manschetten zur Aufnahme jeweils eines einzelnen Pflanztopfs und zur Herstellung eines ansprechenderen Erscheinungsbilds sind beispielsweise bekannt aus EP 1 790 212 B1, DE 81 18 605 U1 sowie EP 2 753 167 B1.

Aus DE 296 01 114 U1 ist ein aufstellbarer Pflanztopfstein bekannt, in welchem in Radialrichtung verstellbare Pflanztopf-Halteabschnitte einsetzbar sind, welche als Doppel-T-förmige Formteile ausgebildet sind.

Aus US 2011/0258925 A1 ist eine Pflanzvorrichtung zur Bildung einer sogenannten "grünen Wand" bekannt. Sie umfasst mehrere übereinander steckbare Pflanzvorrichtungs-Einheiten, die jeweils mehrere geneigte Blenden mit Öffnungen aufweisen, in die Pflanztöpfe einsetzbar sind. Unterhalb der Pflanzvorrichtungs-Einheiten ist ein separates Wasser-Reservoir vorgesehen, in dem eine Pumpe anordenbar ist. Zur Bewässerung wird das Wasser aus dem Wasser-Reservoir über Schläuche nach oben zu den Pflanzvorrichtungs-Einheiten gepumpt und über Tropfleitungen oder Sprühvorrichtungen an die Pflanzen abgegeben. Überschüssiges Wasser läuft innerhalb der Pflanzvorrichtungs-Einheiten nach unten ab und wird zentral in dem Wasser-Reservoir gesammelt. Die Pflanzvorrichtungs-Einheiten haben eine geschlossene Kastenstruktur.

CN106069266 A offenbart ein Pflanzentopfhalter mit einem Reservoir.

CN102640674 A offenbart ein Pflanzentopfhalter für Tropfbewässerung.

Es ist Aufgabe der vorliegenden Erfindung, einen verbesserten Pflanztopfhalter aufzuzeigen, der mindestens eines der oben genannten Kundenbedürfnisse in besserer Weise erfüllt.

Die Erfindung löst diese Aufgabe durch die Merkmale des Hauptanspruchs.

Der Pflanztopfhalter gemäß der vorliegenden Offenbarung ist zur Aufnahme eines oder bevorzugt mehrerer Pflanztöpfe ausgebildet.

Der Pflanztopfhalter hat einen Grundkörper, der im Bereich einer rückseitigen Wandung an einer im Wesentlichen senkrechten Objektfläche befestigbar ist. Der Grundkörper braucht also nicht auf einer ebenen bzw. waagrechten Fläche abgestellt zu werden. Es ist vielmehr möglich, ihn beispielsweise in der Küche an einer freien Wandfläche, oder beispielsweise auf dem Balkon an einer Brüstung oder einem Geländer, oder an einer Seitenwand eines Gebäudes oder eines Möbelstücks zu befestigen.

Gemäß einer bevorzugten Ausführungsvariante ist der Pflanztopfhalter dazu ausgebildet und vorgesehen, an einem außen liegenden Fensterbrett befestigt zu werden. So kann ein Kunde den Pflanztopfhalter insbesondere außenseitig an seinem Küchenfenster platzieren. In dem Pflanztopfhalter können dann Kräuterpflanzen oder andere Küchenpflanzen mitsamt des gekauft Pflanztopfes eingesetzt werden und befinden sich damit jederzeit im direkten Zugriff.

Der Grundkörper hat eine einheitliche Querschnittsform mit einer in der vorgesehenen Befestigungsposition nach oben weisenden Wandung (nachfolgend als Oberwand bezeichnet), einer in der Befestigungsposition nach unten weisenden Wandung (nachfolgend als Unterwand bezeichnet) sowie einer vorderseitigen Zwischenwandung (nachfolgend als Vorderwand bezeichnet). Die Vorderwand erstreckt sich zwischen der Oberwand und der Unterwand. Die Oberwand und die Unterwand können jeweils ein vorderseitiges Ende aufweisen, wobei sich die Vorderwand bevorzugt zwischen diesen Enden erstreckt.

Oberwand, Vorderwand und Unterwand sind einstückig miteinander verbunden.

Die Oberwand ist zur Vorderseite hin nach unten geneigt. In der geneigten Oberwand sind eine, zwei oder mehr Öffnungen vorgesehen, die jeweils eine Topfaufnahme für einen Pflanztopf bilden. Für jeden Pflanztopf kann eine separate Topfaufnahme vorgesehen sein. Alternativ kann eine Topfaufnahme für die Aufnahme von zwei oder mehr Pflanztöpfen, insbesondere für eine Gruppe von Pflanztöpfen vorgesehen sein.

Die in der Befestigungsposition geneigte Anordnung der Oberwand hat verschiedene Vorteile. Zum einen wird die Oberseite des Pflanztopfs zur Vorderseite, d.h. zum Kunden / Nutzer hin geneigt, so dass die Pflanze besser sichtbar und damit ästhetisch ansprechender präsentiert ist. Andererseits wird die Zugänglichkeit zur Pflanze verbessert, was insbesondere für das schnelle Abernten von Blättern, Stängeln, Blüten, Wurzeln oder sonstigen Pflanzenteilen hilfreich ist.

Durch die Unterwand und die Vorderwand wird ein eingesetzter Pflanztopf nach unten hin umschlossen. Etwaig an der Unterseite des Pflanztopfes herauswachsende Wurzeln oder abtropfendes Wasser sind somit durch die Unterwand sowie die Vorderwand abgeschirmt. Dadurch wird einerseits ein sauberes Gesamterscheinungsbild erzeugt und andererseits verhindert, dass Flüssigkeiten oder Pflanzenteile unkontrolliert in die Umgebung abgegeben werden und beispielsweise Flecken verursachen.

Erfindungsgemäß ist auch die Unterwand zur Vorderseite hin nach unten geneigt. Ferner sind an den Stirnenden des Grundkörpers (d.h. an den in Längsrichtung außen liegende Enden) zwischen der geneigten Unterwand und der Vorderwand Stirnwände angeordnet. Die Stirnwände verlaufen bevorzugt im Wesentlichen quer zur Unterwand und zur Vorderwand und somit in der Befestigungsposition im Wesentlichen senkrecht. Alternativ kann ein schräger Verlauf vorgesehen sein. Zwischen den Stirnwänden, der geneigten Unterwand und der Vorderwand wird somit eine Wanne gebildet. Mit anderen Worten sind die Vorderwand, die Unterwand sowie die Stirnwände derart angeordnet und miteinander verbunden, dass sie in der vorgesehenen Befestigungsposition eine flüssigkeitsdichte Wanne bilden, insbesondere eine nach unten und zur Seite hin flüssigkeitsdichte Wanne.

Ein eingesetzter Pflanztopf ragt bevorzugt zumindest teilweise in diese Wanne hinein. Die Wanne kann mit Wasser und etwaig einem Düngezusatz befüllt werden. In der vorgesehenen Befestigungsposition ragt ein Pflanztopf, der in den Pflanztopfhalter eingesetzt ist, bevorzugt (nur) mit einem unteren Abschnitt in die Wanne hinein. Die in dem Pflanztopf befindliche Pflanze oder das umgebende Pflanzsubstrat kann somit ein Stück weit in das in der Wanne enthaltene Wasser eintauchen, so dass die in einem Pflanztopf enthaltene Pflanze auf einfache Weise mit Wasser und Nährstoffen versorgt wird.

Die Wanne kann teilweise oder vollständig mit einem Befeuchtungs-Substrat befüllt sein, beispielsweise mit einem saugfähigen Schwamm, Blähton, einem wasserspeichernden Granulat oder einem in sonstiger Weise geeigneten flüssigkeitsspeichernden Material. Die Wanne kann in einer solchen Weise befüllt sein, dass ein ausreichender Kontakt zwischen einerseits dem Pflanztopf bzw. dem darin enthaltenen Pflanzsubstrat (Erde) oder der Pflanze und andererseits dem Befeuchtungs-Substrat gewährleistet wird.

Die Vorderwand des Pflanztopfhalters kann bevorzugt zur Rückseite hin nach unten geneigt sein. Hierdurch wird ein schlanker und platzsparender Aufbau erreicht.

Der Pflanztopfhalter kann auf beliebige Weise befestigt werden. Bevorzugt ist am rückseitigen Ende der Oberwand eine geeignete Befestigungsstruktur angeordnet, beispielsweise eine Schraubenaufnahme. Eine Befestigungsstruktur kann auch ein einteiliges oder mehrteiliges Fixiermittel umfassen, mit dem es beispielsweise an einem Fensterbrett, einer Fensterlaibung, einem Geländer oder einer Brüstung fixierbar ist.

Bevorzugt ist am rückseitigen Ende der geneigten Oberwand eine im Wesentlichen vertikal nach oben anschließende erste Leiste angeordnet. Die erste Leiste kann ein Bestandteil des Grundkörpers sein. Die Befestigungsstruktur kann bevorzugt an oder in dieser ersten Leiste untergebracht sein.

Weitere vorteilhafte Ausbildungen der Erfindung sind in den Unteransprüchen, der nachfolgenden Beschreibung sowie den beigefügten Zeichnungen angegeben.

Die Erfindung ist in den Zeichnungen beispielhaft und schematisch dargestellt. Diese zeigen:
- Figur 1:: eine beispielhafte Ausführung des Pflanztopfhalters gemäß der vorliegenden Offenbarung in der Befestigungsposition;
- Figur 2:: eine Querschnittsdarstellung des Pflanztopfhalters aus Figur 1 gemäß Schnittlinie II-II;
- Figur 3:: eine seitliche Außenansicht eines Pflanztopfhalters gemäß einer zweiten Ausführungsvariante und mit einem eingesetzten Pflanztopf.

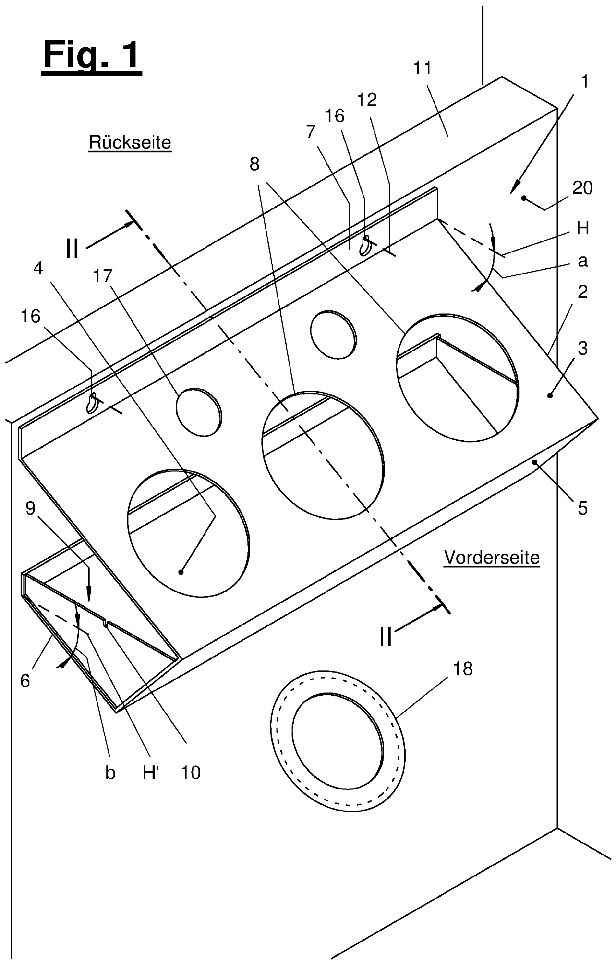

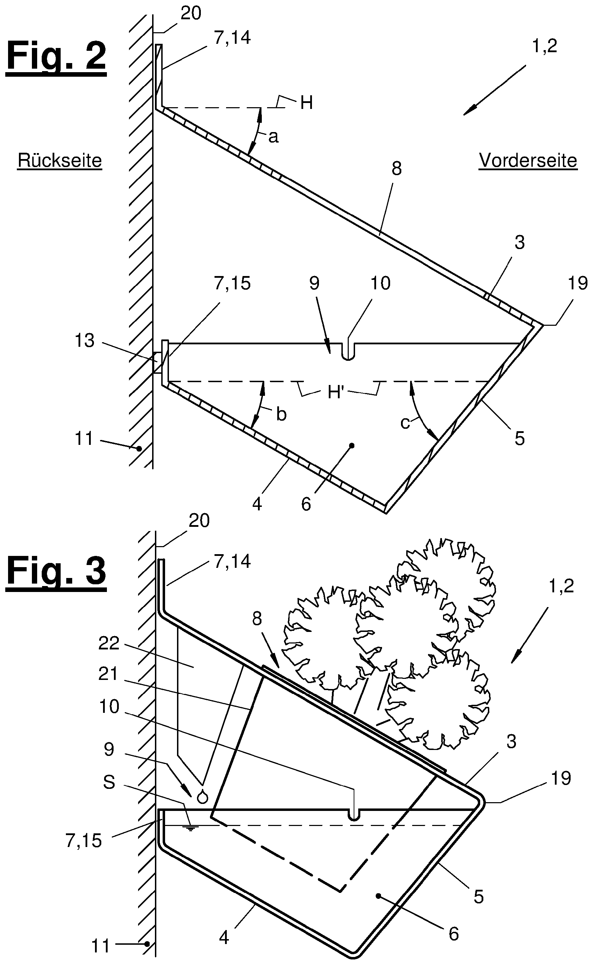

Eine bevorzugte Ausführungsvariante des Pflanztopfhalters gemäß der vorliegenden Offenbarung ist in Figur 1 gezeigt. Die Darstellung zeigt eine perspektivische Ansicht auf einem Pflanztopfhalter (1) der hier beispielhaft an einer Brüstung eines Balkons befestigt ist. Alternativ kann der Pflanztopfhalter (1) an jedem beliebigen anderen externen Objekt (11) und insbesondere an einer im Wesentlichen senkrechten Objektfläche (20) befestigt werden. Figur 3 zeigt eine Seitenansicht auf den Pflanztopfhalter (1) mit einem eingesetzten Pflanztopf (21), der mit einem unteren Abschnitt in die Wanne (9) ragt. In der Wanne (9) ist hier beispielhaft eine Wasserfüllung vorhanden. Der Pegelstand (S) liegt hier auf einem in Vertikalrichtung höheren Niveau als die Unterkante des eingesetzten Pflanztopfes (21).

In den Figuren ist der Pflanztopfhalter (1) in der vorgesehenen Befestigungsposition dargestellt. Dabei ist er an einer Objektfläche (20) befestigt, die bevorzugt eine senkrechte Ausrichtung hat. Diejenige Seite, die in der vorgesehenen Befestigungsposition an der Objektfläche anliegt, stellt die Rückseite des Pflanztopfhalters (1) dar. Die in Horizontalrichtung entgegengesetzte Seite stellt die Vorderseite dar.

Eine Längsrichtung des Pflanztopfhalters erstreckt sich in der vorgesehenen Befestigungsposition im Wesentlichen horizontal entlang der Objektfläche. Die Längsrichtung verläuft in der Befestigungsposition im Wesentlichen parallel zur Vorderkante und rückwärtigen Katen der Oberwand (3). Entlang dieser Längsrichtung hat der Pflanztopfhalter (1) eine einheitliche Querschnittsform.

Der Grundkörper (2) des Pflanztopfhalters (1) umfasst eine Oberwand (3) (nach oben weisende Wandung), eine Unterwand (4) (nach unten weisende Wandung), eine Vorderwand (vorderseitige Zwischenwandung (5)) sowie mind. zwei endseitige Stirnwände (6), zwischen denen die Wanne (9) gebildet ist. Eine bevorzugte Variante sieht vor, dass die Unterwand (4) und die Vorderwand (5) im Wesentlichen flach oder eben ausgebildet sind, was eine einfache Herstellung ermöglicht. Die Unterwand (4) und die Vorderwand (5) können alternativ eine andere Ausbildung haben. Sie können insbesondere eine einachsige oder mehrachsige Krümmung oder sonstige ballige Form haben. Die Oberwand ist bevorzugt zumindest im Bereich der Aufnahmeöffnungen (8) flach ausgebildet, sodass eine ringförmige Anlage zwischen einem Kragen am Pflanztopf (21) und dem Rand der Aufnahmeöffnung (8) erzielt wird.

In dem gezeigten Beispiel ist die Oberwand (4) zur Vorderseite hin nach unten geneigt und es ist ebenfalls die Unterwand (5) zur Vorderseite hin nach unten geneigt. Es handelt sich somit um eine geneigte Oberwand sowie eine geneigte Unterwand. Darüber hinaus ist gemäß dem gezeigten Beispiel in der Befestigungsposition die Vorderwand (5) zur Rückseite hin nach unten geneigt.

Wenn der Pflanztopfhalter wie in dem dargestellten Beispiel in etwa auf Hüfthöhe an einer Wand aufgehängt wird, wird durch die zur Rückseite hin nach unten geneigte Vorderwand (5) zusätzliche Beinfreiheit gewährt.

Die Neigungswinkel (a, b, c) der Oberwand, der Vorderwand und/oder der Unterwand können in Anpassung an eine Außenkontur der zu verwendenden Pflanztöpfe (21) gewählt sein. Die Wahl der Neigungswinkel kann insbesondere derart erfolgen, dass im Wesentlichen einheitliche Abstände zwischen der Vorderwand (5) und ein vorderseitigen Kontur eines Pflanztopfs (21) und andererseits zwischen der Unterwand (4) und einer Bodenkontur des Pflanztopfs (21) erzielt wird. Dies ist beispielhaft in Figur 2 dargestellt.

Wenn der Pflanztopfhalter (1) im Freien befestigt wird, hat die Neigung der Oberwand (3) auch den Vorteil, dass etwaig darauf fallender Niederschlag (Regen, Schnee etc.) zur Vorderseite hin ablaufen bzw. abrutschen kann. Der Niederschlag wird also von der Objektfläche (20) weg transportiert, was der Bildung von Nässeschäden an der Befestigungsstelle entgegenwirkt.

Figur 2 zeigt eine Querschnittansicht des Pflanztopfhalters (1), bzw. dessen Grundkörper (2). Die Neigungswinkel (a, b, c) der Oberwand (3), der Unterwand (4) sowie der Vorderwand (5) können beliebig gewählt sein. In den gezeigten Beispielen beträgt der erste Neigungswinkel (a) der geneigten Oberwand (4) gegenüber einer Horizontalebene (H) im Wesentlichen 30° (Winkelgrad). Bevorzugt kann der erste Neigungswinkel (a) bei anderen Ausführungen zwischen 20° und 50° (Winkelgrad) gegenüber einer Horizontalebene (H) betragen.

Der zweite Neigungswinkel (b) gegenüber einer Horizontalebene (H') beträgt in den gezeigten Beispielen ebenfalls im Wesentlichen 30° (Winkelgrad). Er kann bevorzugt in anderen Ausführungen ebenfalls zwischen 20° und 50° (Winkelgrad) gegenüber einer Horizontalebene (H') betragen.

Besonders bevorzugt können der erste Neigungswinkel (a) und der zweite Neigungswinkel (b) im Wesentlichen den gleichen Betrag haben. Anders ausgedrückt können die Oberwand (3) und die Unterwand (4) in der vorgesehenen Befestigungsposition bevorzugt im Wesentlichen parallel verlaufen.

Der zwischen der Oberwand und der Vorderwand eingeschlossene Winkel (Bauchwinkel, in den Zeichnungen nicht gekennzeichnet) ist bevorzugt ein spitzer Winkel. Der Bauchwinkel kann insbesondere zwischen 75° und 90° (Winkelgrad) betragen. Der zwischen der Unterwand und der Vorderwand eingeschlossene Winkel (Bodenwinkel, in den Zeichnungen nicht gekennzeichnet) ist bevorzugt ein stumpfer Winkel. Der Bodenwinkel kann insbesondere zwischen 90° und 115° (Winkelgrad) betragen. Alternativ sind andere Winkelbeträge möglich.

Figur 2 zeigt den Pflanztopfhalter aus Figur 1 in einer Querschnittansicht. Hier sind die Neigungswinkel (a, b, c) der Oberwand (3), der Unterwand (4) sowie der Vorderwand (5) nochmals verdeutlicht. Die geneigte Vorderwand (5) hat bevorzugt einen dritten Neigungswinkel (c) gegenüber einer Horizontalebene (H'), der im Wesentlichen 50° (Winkelgrad) beträgt. Alternativ kann der Neigungswinkel (c) gegenüber einer Horizontalebene (H') zwischen 30° und 70° (Winkelgrad) betragen.

Am rückseitigen Ende der geneigten Unterwand (4) kann gemäß einer bevorzugten Ausführung eine (in der Befestigungsposition) im Wesentlichen vertikal nach oben anschließende zweite Leiste (15) angeordnet sein. Die zweite Leiste (15) kann eine oder mehrere Funktionen haben. Beispielsweise kann an der zweiten Leiste (15) mind. ein Abstandhalter oder Dämpfer (13) angeordnet sein, der beispielhaft in Figur 2 dargestellt ist. Der Abstandhalter oder Dämpfer (13) ist bevorzugt an der zur Rückseite weisenden Fläche der zweiten Leiste (15) befestigt. Alternativ oder zusätzlich kann ein Abstandhalter oder Dämpfer (13) an einer anderen Stelle oder Seite der zweiten Leiste (15) oder direkt an der rückseitigen Wandung (7) angeordnet sein. Wiederum alternativ kann auf einen Abstandhalter oder Dämpfer (13) verzichtet werden, was beispielhaft in Figur 3 gezeigt ist.

Die zweite Leiste (15) kann eine beliebige Form und Größe haben. Gemäß der bevorzugten Ausführungsvariante in den Figuren endet die zweite Leiste (15) (in der Befestigungsposition) im Wesentlichen auf dem Höhenniveau der vorderseitigen Kante (19) zwischen der Vorderwand (5) und der Oberwand (3), d.h. die Höhenerstreckung der zweiten Leiste (15) ist in der Befestigungsposition im Wesentlichen durch die Höhe der vorderseitigen Kante (19) festgelegt. Alternativ kann ein anderer Höhenverlauf vorgesehen sein.

Wie sich aus den Figuren ergibt, kann die rückseitige Wandung (7) zwei- oder mehrteilig ausgebildet sein und insbesondere die erste Leiste (14) und/oder die zweite Leiste (15) umfassen. Mit anderen Worten kann die rückseitige Wandung (7) zwischen der rückseitigen Kante der Oberwand (3) und der rückseitigen Kante der Unterwand (4) mindestens eine Leiste (15) und weiterhin eine Öffnung vorgesehen sein. Die Öffnung kann sich insbesondere über die gesamte horizontale Länge (in Längsrichtung) des Grundkörpers (2) erstrecken kann. Dies ist vorteilhaft, weil dann der Grundkörper (2), der die Oberwand (3), die Vorderwand (5) und die Unterwand (4) sowie etwaig die erste und/oder die zweite Leiste (14, 15) umfasst, vollständig in einem Biegeverfahren herstellbar ist. Eine rückseitige Öffnung hat ferner Vorteile für eine Belüftung der in den Pflanztopfhalter (1) eingesetzten Pflanztöpfe (21) bzw. enthaltene Pflanzen und Pflanzsubstrat. Die Öffnung beugt insbesondere einem Hitzestau innerhalb des Grundkörpers vor, der sonst etwaig durch Sonneneinstrahlung hervorgerufen werden könnte.

Die zweite Leiste (15) kann eine (Teil-) Begrenzung der Wanne (9) bilden. Dieser Fall ist bevorzugt und in den Figuren gezeigt. Die Stirnwände (6) sind dann bevorzugt mit der zweiten Leiste (15) verbunden, was in Figuren 2 und 3 gut ersichtlich ist. Die Oberkante der Stirnwände (6) kann bevorzugt auf Höhe der vorderseitigen Kante (19) zwischen der Vorderwand (5) und der Oberwand (3) verlaufen. Sie kann entsprechend an der Rückseite im Wesentlichen fluchtend mit der Oberkante der zweiten Leiste (15) abschließen. In der vorgesehenen Befestigungsposition sind somit als oberseitige Begrenzungskanten der Wanne (9) umlaufend die vordere Kante (19) zwischen Oberwand (3) und Vorderwand (5), die Oberkanten der Stirnwände (9) sowie die Oberkante der zweiten Leiste (15) vorgesehen.

An den Stirnseiten des Grundkörpers (2) kann ein Bereich zwischen mind. einer der Stirnwände (6) und der darüber liegenden Oberwand (4) entsprechend geöffnet sein. Mit anderen Worten weist der Pflanztopfhalter (1) bevorzugt mind. eine seitliche Zugangsöffnung zur Wanne (9) bzw. zu dem zwischen Oberwand, Vorderwand und Unterwand eingeschlossenen Raum auf. Die seitliche Öffnung kann vorteilhafter Weise dazu genutzt werden, Flüssigkeit und/oder ein Düngemittel nachzufüllen und/oder auf das oben erwähnte feuchtigkeitsspeichernde Substrat (nicht dargestellt) einzuwirken.

Die mind. eine seitliche Öffnung begünstigt einen Luftaustausch durch den Innenraum des Pflanztopfhalters (2). Dies ist insbesondere dann vorteilhaft, wenn der Pflanztopfhalter (2) im Sommer im Außenbereich aufgehängt ist und/oder starker Sonneneinstrahlung ausgesetzt ist. Ein durch die seitlichen Öffnungen durchtretender Wind kann eine Kühlung herbeiführen, die auch durch das Verdunsten von Flüssigkeit aus der Wanne (9) und/oder dem feuchtigkeitsspeichernden Substrat begünstigt wird. Die wind- und/oder verdunstungsbedingte Kühlung vermindert oder verhindert ein vorzeitiges Austrocken der eingesetzten Pflanzen und fördert die Vegetation.

Die eine oder mehreren Topfaufnahmen (8) können eine beliebige Anordnung, Ausbildung und Größe haben. Bevorzugt sind in Längsrichtung des Pflanztopfhalters (1) zwei oder mehr Topfaufnahmen hintereinander angeordnet. Die Topfaufnahmen (8) können gleich oder unterschiedlich geformt und angeordnet sein. Die mind. eine Topfaufnahme (8) und insbesondere alle Topfaufnahmen (8) können je nach Einsatzzweck
- eine runde Form haben, oder
- eine quadratische Form haben, oder
- eine rechteckige Form haben.

Als besonders günstig hat es sich erwiesen, alle Topfaufnahmen (8) mit einer runden Grundform vorzusehen, wobei die Topfaufnahmen (8) einen einheitlichen Durchmesser haben. Der Durchmesser kann insbesondere 10 cm, 11 cm oder 12 cm betragen, was derzeit in der Praxis übliche Kragenumfänge von Pflanztöpfen für Küchenkräuter und kurzlebige Zierpflanzen sind.

Gemäß einer weiteren bevorzugten Variante kann in der Oberwand (4) mind. eine weitere Öffnung (17) vorgesehen sein (vgl. Figur 1). Die mind. eine weitere Öffnung (17) ist bevorzugt erheblich kleiner als die ein oder mehreren Topfaufnahmen (8). Sie kann weiter insbesondere als Gießöffnung und/oder als Werkzeugaufnahme dienen.

Der Pflanztopfhalter (1) kann einen Wasser- oder Flüssigkeitsspeicher (22) aufweisen. Dieser kann eine beliebige Größe und Anordnung haben. Gemäß dem Beispiel von Figur 3 kann der Wasserspeicher (22) ein- oder mehrfach angeordnet sein und insbesondere in einem Bereich zwischen der Oberwand (3) und der Unterwand (4) und zur Rückseite hin hinter mind. einer Topfaufnahme (8) angeordnet sein. Der mind. eine Wasserspeicher (22) kann insbesondere durch eine der oben erwähnten weiteren Öffnungen (17) zugänglich sein, insbesondere um den Wasserspeicher (22) aufzufüllen und/oder zu reinigen. Der Wasserspeicher (22) kann ein Befeuchtungssystem oder Bewässerungssystem aufweisen, durch welches in geeigneten Mengen und zu geeigneten Zeitabständen Flüssigkeit oder Feuchtigkeit in die Wanne (9) oder das feuchtigkeitsspeichernde Substrat abgegeben wird. Die Abgabe kann bevorzugt steuerbar und/oder einstellbar sein.

Gemäß einer bevorzugten Ausführungsvariante können für einzelne Topfaufnahmen (8) und/oder Gruppen von Topfaufnahmen (8) jeweils separate Wannen und/oder Befeuchtungs-Substrate und/oder Wasserspeicher (22) vorgesehen sein. Dementsprechend können bedarfsweise eine oder mehrere Zwischenwände vorgesehen sein, deren Ausbildung und Form insbesondere gleich oder ähnlich zu den Stirnwänden (6) gewählt sein kann. Eine Zwischenwand kann insbesondere in Längsrichtung des Pflanztopfhalters (1) zwischen zwei Topfaufnahmen (8) bzw. zwischen mind. einer Topfaufnahme (8) und einer benachbarten Gruppe von Topfaufnahmen (8) bzw. zwischen zwei benachbarten Gruppen von Topfaufnahmen (8) angeordnet sein.

Für einige oder alle Wannenteile kann ein jeweils separater Wasserspeicher (22) vorgesehen sein.

Wie in Figur 1 dargestellt, kann der Pflanztopfhalter (1) mind. einen ringförmigen Adaptereinsatz (18) umfassen. Der Adaptereinsatz (18) ist bevorzugt dazu vorgesehen und angepasst, in eine Topfaufnahme (8) eingesetzt zu werden. Hierzu kann der Außenumfang des Adaptereinsatzes (18) an die entsprechende Größe der Topfaufnahme (8) angepasst sein. In dem Beispiel von Figur 1 sind kreisringförmige Topfaufnahmen (8) vorgesehen. Entsprechend hat der dargestellte Adaptereinsatz (18) einen kreisringförmigen Außenumfang. Gemäß den oben erwähnten Abwandlungsformen kann der Adaptereinsatz (18) entsprechend einen quadratringförmigen Außenumfang oder einen rechteckringförmigen Umfang haben. Der Innenumfang des Adaptereinsatzes kann ebenso entsprechend an eine jeweils andere Querschnittskontur eines Pflanztopfs (21) angepasst sein. Entsprechend kann die Innenkontur eine runde Form, eine quadratische Form, eine rechteckige Form oder eine in sonstiger Weise geeignete Form haben.

Durch den Adaptereinsatz (18) kann auch eine gegenüber der Oberwand (3) weiter nach außen oder nach innen versetzte Aufnahmekontur geschaffen werden, so dass höhere oder niedrigere Pflanztöpfe (21) verwendet werden können und/oder so dass die Eintauchtiefe eines Pflanztopfs (21) in den Innenraum des Pflanztopfhalters (1) und insbesondere in die Wanne (9) einstellbar sein kann.

An mind. einer Stirnwand (6) kann eine Überlauföffnung (10) angeordnet sein. Die Überlauföffnung (10) kann eine beliebige Ausbildung, Form und Anordnung haben. Bevorzugt weist die Stirnwand (6) eine in der Befestigungsposition im Wesentlichen horizontal verlaufende Oberkante auf. In diesem Fall kann eine Überlauföffnung (10) durch einen Einschnitt gebildet sein, der sich von der Oberkante her im Wesentlichen senkrecht nach unten erstreckt.

Mind. eine Überlauföffnung (10) kann ebenso in einer der oben erwähnten Zwischenwände zur Unterteilung der Wanne (9) vorgesehen sein.

Durch die Überlauföffnung(en) (10) wird erreicht, dass beispielsweise durch Regenwasser oder durch über Gießen eingebrachtes überschüssiges Wasser in kontrollierter Weise und an einer vorgegebenen Stelle abläuft.

Ferner kann durch eine oder mehrere Überlauföffnungen in den Zwischenwänden erreicht werden, dass durch das einseitige Einbringen von Wasser in die Wanne (9) eine Verteilung bis in alle Teilabschnitte der Wanne (9) erreicht wird. Es wird weiterhin vermieden, dass überschüssiges Wasser unkontrolliert beispielsweise in Richtung der Rückseite austritt, wo es zu einer Fleckenbildung an der Objektfläche (10) führen könnte.

Der Pflanztopfhalter (1) und insbesondere dessen Grundkörper (2) können aus einem beliebigen Material gefertigt sein. Eine bevorzugte Ausführung sieht vor, dass die Oberwand, die Vorderwand und die Unterwand sowie etwaig die erste und/oder zweite Leiste (14,15) aus einem durchgehenden Materialstück gefertigt sind. Weiterhin kann der Grundkörper (2) bevorzugt aus einem Metall gefertigt sein, insbesondere aus einem Aluminiumblech. Das Aluminiumblech kann ein oder mehrmals gebogen werden, um die verschiedenen beschriebenen Wandungsteile zu bilden.

Die Stirnwände (6) können auf beliebige Weise angeordnet sein. Sie können an zumindest einer Kante einstückig mit der Vorderwand (5) der Unterwand (6) oder der zweiten Leiste (15) verbunden sein. Alternativ kann eine Stirnwand (6) als separate Wandung eingesetzt und beispielsweise durch Schweißen angebunden sein. In den gezeigten Beispielen sind die Stirnwände (6) durch Schweißen mit der Unterwand (4), der Vorderwand (5) und etwaig der zweiten Leiste (15) verbunden. Die Schweißwanne ist bevorzugt flüssigkeitsdicht ausgeführt.

Gemäß einer weiteren bevorzugten Ausbildung ist der Grundkörper (2) beschichtet. Hierfür kommt insbesondere eine Pulverbeschichtung und/oder eine Lackierung in Frage. Die Beschichtung kann verschiedenen Zwecken dienen. Einerseits kann eine höhere Oberflächenbelastbarkeit und/oder eine antibakterielle Wirkung erreicht werden. Auch die Reinigbarkeit kann durch eine Beschichtung verbessert sein. Andererseits kann durch die Beschichtung eine farbliche Anpassung und/oder ein Korrosionsschutz erreicht werden.

Abwandlungen der Erfindung sind in verschiedener Weise möglich. Insbesondere können die zu den Ausführungsbeispielen gezeigten, beschriebenen oder beanspruchten Merkmale in beliebiger Weise miteinander kombiniert oder untereinander ersetzt werden.

In den gezeigten Beispielen sind die Oberwand (3), die Vorderwand (5) und die Unterwand (6) im Wesentlichen flach bzw. eben ausgebildet.

Alternativ kann mindestens eine dieser Wandungen ballig ausgeformt sein. Ferner ist es möglich, dass beispielsweise die Vorderwand (5) und die Unterwand (6) durch mehrere Teilstücke gebildet sind, die insbesondere untereinander abgewinkelt oder gekrümmt verbunden sein können. Wiederum alternativ können die Vorderwand (5) und die Unterwand (6) beispielsweise zu einem gemeinsamen schalenförmigen Element verbunden sein, insbesondere in Form einer Halbzylinderschale.

Auf die ein oder mehreren seitlichen Öffnungen und/oder auf die rückseitige Öffnung kann verzichtet werden. So können die Oberkante der Seitenwände (6) und/oder die Oberkante der zweiten Leiste (15) soweit nach oben hin verlängert werden, dass sie mit der Oberwand (3) abschließen. Alternativ können eine oder mehrere zusätzliche Abdeckungen vorgesehen sein, um die seitlichen und/oder die rückseitige Öffnung zu verschließen. Dies kann beispielsweise in Wintermonaten angezeigt sein, um die Pflanztöpfe (21) bzw. die darin enthaltenen Pflanzen besser gegen Kälte oder Frost zu schützen.

An mindestens einer der genannten Wandungen (3,4,5,6) kann eine Isolierung, insbesondere eine thermische Isolierung vorgesehen sein, was wiederum den Schutz gegen Frost oder übermäßige Hitze im Sommer dienen kann.

Der Pflanztopfhalter (1) kann einen oder mehrere Befestigungsadapter umfassen, damit er beispielsweise an einem Fensterbrett an der Gebäudeaußenseite, einer Balkonbrüstung, einem Geländer oder einem Gartenzaun befestigt werden kann. Der mindestens eine Befestigungsadapter ist bevorzugt zur werkzeugfreien Montage ausgebildet.

Ferner kann der Pflanztopfhalter (1) mindestens einen Ständer umfassen, durch den eine Objektfläche (20) gemäß den oben erwähnten Beispielen erzeugt wird, an welcher der Pflanztopfhalter (1) befestigbar ist. Der Pflanztopfhalter (1) kann etwaig einstückig mit einem solchen Ständer verbunden sein, so dass er auf dem Boden oder auf einer Tischfläche etc. aufstellbar ist.

Gemäß einer bevorzugten Ausführung sind zwei oder mehr Topfaufnahmen (8) und insbesondere alle Topfaufnahmen (8) in Reihenform an der Oberwand (3) angeordnet. Die Ausrichtung der Reihe an Topfaufnahmen ist dabei bevorzugt parallel zur Längsrichtung. Bevorzugt ist genau eine Reihe an Topfaufnahmen vorgesehen (vgl. Figur 1). Alternativ können zwei oder mehr Reihen an Topfaufnahmen vorgesehen sein, die insbesondere zueinander parallel ausgerichtet sein können. Wiederum alternativ ist eine Anordnung von mehreren Topfaufnahmen in einem Raster möglich, beispielsweise in einem Quadrat- oder Rechteck-Raster oder in einem Waben-Raster.

### BEZUGSZEICHENLISTE

- 1: Pflanztopfhalter
- 2: Grundkörper
- 3: Nach oben weisende Wandung / Oberwand
- 4: Nach unten weisende Wandung / Unterwand
- 5: Vorderseitige Zwischenwandung / Vorderwand
- 6: Stirnwände
- 7: Rückseitige Wandung / Rückwand
- 8: Topfaufnahme / Öffnung
- 9: Wanne
- 10: Überlauföffnung
- 11: Externes Objekt / Geländer / Brüstung
- 12: Befestigungsmittel / Schraube
- 13: Abstandhalter / Dämpfer
- 14: Leiste
- 15: Leiste
- 16: Befestigungsstruktur / Schraubenaufnahme
- 17: Öffnung / Gießöffnung / Werkzeugaufnahme
- 18: Adaptereinsatz
- 19: Vorderseitige Kante
- 20: Objektfläche
- 21: Pflanztopf
- 22: Wasserspeicher
- a: Erster Neigungswinkel
- b: Zweiter Neigungswinkel
- c: Dritter Neigungswinkel
- H, H': Horizontalebene
- Q: Querschnittsform
- S: Wasserspiegel

## Patentansprüche

1. Pflanztopfhalter zur Aufnahme eines oder mehrerer Pflanztöpfe (21), wobei der Pflanztopfhalter (1) einen Grundkörper (2) mit einer Oberwand (3), einer Unterwand (4) und einer Vorderwand (5) aufweist, wobei Oberwand (3), Vorderwand (5) und Unterwand (4) einstückig miteinander verbunden sind , und wobei der Pflanztopfhalter (1) eine im Wesentlichen einheitliche Querschnittsform (Q) hat und im Bereich einer rückseitigen Wandung (7) an einer im Wesentlichen senkrechten Objektfläche (20) befestigbar ist, und wobei die Oberwand (3) eine in der Befestigungsposition nach oben weisende Wandung ist und zur Vorderseite hin nach unten geneigt ist, und wobei in der geneigten Oberwand (3) eine, zwei oder mehr Öffnungen (8) vorgesehen sind, die jeweils eine Topfaufnahme für einen Pflanztopf (21) bilden, und wobei die Vorderwand (5) eine vorderseitige Zwischenwandung ist, welche zwischen dem vorderen Ende der Oberwand (3) und dem vorderen Ende der Unterwand (4) verläuft,
**dadurch gekennzeichnet, dass**
- die Unterwand (4) eine in der Befestigungsposition nach unten weisende Wandung ist und zur Vorderseite hin nach unten geneigt ist, und wobei
- an den Stirnenden des Grundkörpers (2) zumindest zwischen der geneigten Unterwand (4) und der Vorderwand (5) Stirnwände (6) angeordnet sind, und wobei
- zwischen den Stirnwänden (6), der Unterwand (4) und der Vorderwand (5) eine flüssigkeitsdichte Wanne (9) gebildet ist.

2. Pflanztopfhalter nach Anspruch 1, wobei an den Stirnseiten des Grundkörpers (2) ein Bereich zwischen mindestens einer Stirnwand (6) und der darüber liegenden Oberwand (4) geöffnet ist.

3. Pflanztopfhalter nach Anspruch 1 oder 2, wobei
- die geneigte Oberwand (3) in der Befestigungsposition einen ersten Neigungswinkel (a) gegenüber einer Horizontalebene (H) zwischen 20° und 50° hat, insbesondere im Wesentlichen 30°; UND/ODER
- die geneigte Unterwand (4) in der Befestigungsposition einen zweiten Neigungswinkel (b) gegenüber einer Horizontalebene (H') zwischen 20° und 50° hat, insbesondere im Wesentlichen 30°; UND/ODER wobei
- die geneigte Vorderwand einen dritten Neigungswinkel (c) gegenüber einer Horizontalebene (H') zwischen 30° und 70° hat, insbesondere im Wesentlichen 50°.

4. Pflanztopfhalter nach einem der vorhergehenden Ansprüche, wobei
- am rückseitigen Ende der geneigten Oberwand (4) eine im Wesentlichen vertikal nach oben anschließende erste Leiste (14) angeordnet ist; UND/ODER wobei
- am rückseitigen Ende der Unterwand (4) eine im Wesentlichen vertikal nach oben anschließende zweite Leiste (15) angeordnet ist.

5. Pflanztopfhalter nach dem vorhergehenden Anspruch, wobei die zweite Leiste (15) im Wesentlichen auf Höhe der vorderseitigen Kante (19) zwischen der Vorderwand (5) und der Oberwand (3) endet und wobei insbesondere die Stirnwände (6) mit der zweiten Leiste (15) verbunden sind und eine Oberkante der Stirnwände (6) im Wesentlichen auf Höhe der vorderseitigen Kante (19) zwischen der Vorderwand (5) und der Oberwand (3) verläuft.

6. Pflanztopfhalter nach einem der vorhergehenden Ansprüche, wobei die Rückseitige Wandung (7) zwei- oder mehrteilig ausgebildet ist und insbesondere die erste Leiste (14) und/oder die zweite Leiste (15) umfasst.

7. Pflanztopfhalter nach einem der vorhergehenden Ansprüche, wobei
- am rückseitigen Ende der Oberwand (4) oder an der ersten Leiste (14) eine Befestigungsstruktur (16) angeordnet ist; UND/ODER wobei
- an der rückseitigen Wandung (7), insbesondere an der zweiten Leiste (15), mindestens ein Abstandshalter oder Dämpfer (13) angeordnet ist.

8. Pflanztopfhalter nach einem der vorhergehenden Ansprüche, wobei in der Oberwand (4) mindestens eine weitere Öffnung (17) vorgesehen ist, die insbesondere erheblich kleiner ist als eine Topfaufnahme (8) und weiter insbesondere als Gießöffnung und/oder Werkzeugaufnahme dient.

9. Pflanztopfhalter nach einem der vorhergehenden Ansprüche, wobei mindestens eine Topfaufnahme (8) und insbesondere alle Topfaufnahmen (8)
- Eine runde Form hat/haben, oder
- Eine quadratische Form hat/haben, oder
- Eine rechteckige Form hat/haben.

10. Pflanztopfhalter nach einem der vorhergehenden Ansprüche, wobei der Pflanztopfhalter mindestens einen ringförmigen Adaptereinsatz (18) umfasst, der in eine Topfaufnahme (8) einsetzbar ist, wobei der Außenumfang des Adaptereinsatzes an die Größe der Topfaufnahme angepasst ist.

11. Pflanztopfhalter nach einem der vorhergehenden Ansprüche, wobei
- der Grundkörper aus einem Metall gefertigt ist, insbesondere aus einem Aluminiumblech; UND/ODER wobei
- der Grundkörper beschichtet ist, und insbesondere eine Pulverbeschichtung oder Lackierung aufweist.

12. Pflanztopfhalter nach einem der vorhergehenden Ansprüche, wobei
- eine Stirnwand (6) eine in der Befestigungsposition im Wesentlichen horizontal verlaufende Oberkante aufweist; UND/ODER wobei
- an mindestens einer Stirnwand (6) eine Überlauföffnung (10) angeordnet ist; UND/ODER wobei
- die Stirnwände (6) mit der Unterwand (4), der Vorderwand (5) und etwaig der zweiten Leiste (15) flüssigkeitsdicht verbunden sind, insbesondere durch Schweißen.

13. Pflanztopfhalter nach einem der vorhergehenden Ansprüche, wobei der Pflanztopfhalter mindestens einen Wasserspeicher (22) aufweist.

14. Pflanztopfhalter nach einem der vorhergehenden Ansprüche, wobei der Pflanztopfhalter mindestens eine Zwischenwand aufweist, die insbesondere die Wanne (9) in Längsrichtung unterteilt.

15. Pflanztopfhalter nach einem der vorhergehenden Ansprüche, wobei eine Zwischenwand in Längsrichtung des Pflanztopfhalters (1) zwischen zwei Topfaufnahmen (8) angeordnet ist.

## Claims

1. Plant-pot holder for holding one or more plant pots (21), wherein the plant-pot holder (1) has a main body (2) with an upper wall (3), a lower wall (4) and a front wall (5), wherein the upper wall (3), front wall (5) and lower wall (4) are connected to one another in one piece, and wherein the plant-pot holder (1) has an essentially consistent cross-sectional shape (Q) and, in the region of a rear-side wall (7), can be fastened on an essentially vertical object surface (20), and wherein the upper wall (3) is a wall which, in the fastening position, is oriented upwards, and it is inclined downwards in the direction of the front side, and wherein the inclined upper wall (3) contains one, two or more openings (8), each forming a pot mount for a plant pot (21), and wherein the front wall (5) is a front-side intermediate wall, which runs between the front end of the upper wall (3) and the front end of the lower wall (4),
**characterized in that**
- the lower wall (4) is a wall which, in the fastening position, is oriented downwards, and it is inclined downwards in the direction of the front side, and wherein
- end walls (6) are arranged at the ends of the main body (2), at least between the inclined lower wall (4) and the front wall (5), and wherein
- a liquid-tight tray (9) is formed between the end walls (6), the lower wall (4) and the front wall (5) .

2. Plant-pot holder according to Claim 1, wherein a region between at least one end wall (6) and the upper wall (4) located above the same is open on the end sides of the main body (2).

3. Plant-pot holder according to Claim 1 or 2, wherein
- in the fastening position, the inclined upper wall (3) is at a first angle of inclination (a) of between 20° and 50°, in particular essentially 30°, in relation to a horizontal plane (H); AND/OR
- in the fastening position, the inclined lower wall (4) is at a second angle of inclination (b) of between 20° and 50°, in particular essentially 30°, in relation to a horizontal plane (H'); AND/OR wherein
- the inclined front wall is at a third angle of inclination (c) of between 30° and 70°, in particular essentially 50°, in relation to a horizontal plane (H').

4. Plant-pot holder according to one of the preceding claims, wherein
- the rear end of the inclined upper wall (4) has an essentially vertically upwardly adjoining first strip (14) arranged on it; AND/OR wherein
- the rear end of the lower wall (4) has an essentially vertically upwardly adjoining second strip (15) arranged on it.

5. Plant-pot holder according to the preceding claim, wherein the second strip (15) terminates essentially level with the front-side edge (19) between the front wall (5) and the upper wall (3), and wherein in particular the end walls (6) are connected to the second strip (15), and an upper edge of the end walls (6) runs essentially level with the front-side edge (19) between the front wall (5) and the upper wall (3).

6. Plant-pot holder according to one of the preceding claims, wherein the rear-side wall (7) is formed in two or more parts and comprises, in particular, the first strip (14) and/or the second strip (15).

7. Plant-pot holder according to one of the preceding claims, wherein
- a fastening structure (16) is arranged at the rear end of the upper wall (4) or on the first strip (14); AND/OR wherein
- at least one spacer or damper (13) is arranged on the rear-side wall (7), in particular on the second strip (15).

8. Plant-pot holder according to one of the preceding claims, wherein the upper wall (4) contains at least one further opening (17), which is, in particular, considerably smaller than a pot mount (8) and, furthermore, serves, in particular, as a pouring opening and/or tool mount.

9. Plant-pot holder according to one of the preceding claims, wherein at least one pot mount (8) and, in particular, all the pot mounts (8) is/are
- round or
- square or
- rectangular.

10. Plant-pot holder according to one of the preceding claims, wherein the plant-pot holder comprises at least one annular adapter insert (18), which can be inserted into a pot mount (8), wherein the outer circumference of the adapter insert is adapted to the size of the pot mount.

11. Plant-pot holder according to one of the preceding claims, wherein
- the main body is produced from a metal, in particular from an aluminium sheet; AND/OR wherein
- the main body is coated and, in particular, has a powder coating or a coat of paint or varnish.

12. Plant-pot holder according to one of the preceding claims, wherein
- in the fastening position, an end wall (6) has an essentially horizontally running upper edge; AND/OR wherein
- an overflow opening (10) is arranged on at least one end wall (6); AND/OR wherein
- the end walls (6) are connected in a liquid-tight manner, in particular by welding, to the lower wall (4) the front wall (5) and possibly the second strip (15).

13. Plant-pot holder according to one of the preceding claims, wherein the plant-pot holder has at least one water reservoir (22).

14. Plant-pot holder according to one of the preceding claims, wherein the plant-pot holder has at least one intermediate wall which subdivides in particular the tray (9) in the longitudinal direction.

15. Plant-pot holder according to one of the preceding claims, wherein an intermediate wall is arranged between two pot mounts (8), as seen in the longitudinal direction of the plant-pot holder (1).

## Revendications

1. Support de pots de plantes pour la réception d'un ou de plusieurs pots de plantes (21), le support de pots de plantes (1) présentant un corps de base (2) comprenant une paroi supérieure (3), une paroi inférieure (4) et une paroi avant (5), la paroi supérieure (3), la paroi avant (5) et la paroi inférieure (4) étant reliées entre elles d'un seul tenant, et le support de pots de plantes (1) ayant une forme de section transversale (Q) essentiellement uniforme et pouvant être fixé dans la zone d'une paroi côté arrière (7) sur une surface d'objet (20) essentiellement verticale, et la paroi supérieure (3) étant une paroi orientée vers le haut dans la position de fixation et étant inclinée vers le bas en direction du côté avant, et une, deux ou davantage d'ouvertures (8) étant prévues dans la paroi supérieure inclinée (3), lesquelles forment chacune un réceptacle de pot pour un pot de plante (21), et la paroi avant (5) étant une paroi intermédiaire côté avant, qui s'étend entre l'extrémité avant de la paroi supérieure (3) et l'extrémité avant de la paroi inférieure (4), **caractérisé en ce que**
- la paroi inférieure (4) est une paroi orientée vers le bas dans la position de fixation et est inclinée vers le bas en direction du côté avant, et dans lequel
- des parois frontales (6) sont agencées aux extrémités frontales du corps de base (2) au moins entre la paroi inférieure inclinée (4) et la paroi avant (5), et dans lequel
- une cuve (9) étanche aux liquides est formée entre les parois frontales (6), la paroi inférieure (4) et la paroi avant (5).

2. Support de pots de plantes selon la revendication 1, dans lequel, sur les côtés frontaux du corps de base (2), une zone est ouverte entre au moins une paroi frontale (6) et la paroi supérieure (4) située au-dessus.

3. Support de pots de plantes selon la revendication 1 ou 2, dans lequel
- la paroi supérieure inclinée (3), dans la position de fixation, a un premier angle d'inclinaison (a) par rapport à un plan horizontal (H) compris entre 20° et 50°, notamment d'essentiellement 30° ; ET/OU
- la paroi inférieure inclinée (4), dans la position de fixation, a un deuxième angle d'inclinaison (b) par rapport à un plan horizontal (H') compris entre 20° et 50°, notamment d'essentiellement 30° ; ET/OU dans lequel
- la paroi avant inclinée a un troisième angle d'inclinaison (c) par rapport à un plan horizontal (H') compris entre 30° et 70°, notamment d'essentiellement 50°.

4. Support de pots de plantes selon l'une quelconque des revendications précédentes, dans lequel
- une première baguette (14) se raccordant essentiellement verticalement vers le haut est agencée à l'extrémité côté arrière de la paroi supérieure inclinée (4) ; ET/OU dans lequel
- une deuxième baguette (15) se raccordant essentiellement verticalement vers le haut est agencée à l'extrémité côté arrière de la paroi inférieure (4).

5. Support de pots de plantes selon la revendication précédente, dans lequel la deuxième baguette (15) se termine essentiellement au niveau du bord côté avant (19) entre la paroi avant (5) et la paroi supérieure (3) et dans lequel, notamment, les parois frontales (6) sont reliées à la deuxième baguette (15) et un bord supérieur des parois frontales (6) s'étend essentiellement au niveau du bord côté avant (19) entre la paroi avant (5) et la paroi supérieure (3).

6. Support de pots de plantes selon l'une quelconque des revendications précédentes, dans lequel la paroi côté arrière (7) est configurée en deux parties ou plus et comprend notamment la première baguette (14) et/ou la deuxième baguette (15).

7. Support de pots de plantes selon l'une quelconque des revendications précédentes, dans lequel
- une structure de fixation (16) est agencée à l'extrémité côté arrière de la paroi supérieure (4) ou sur la première baguette (14) ; ET/OU dans lequel
- au moins un espaceur ou un amortisseur (13) est agencé sur la paroi côté arrière (7), notamment sur la deuxième baguette (15).

8. Support de pots de plantes selon l'une quelconque des revendications précédentes, dans lequel au moins une ouverture supplémentaire (17) est prévue dans la paroi supérieure (4), laquelle est notamment nettement plus petite qu'un réceptacle de pot (8) et sert en outre notamment d'ouverture d'arrosage et/ou de réceptacle d'outil.

9. Support de pots de plantes selon l'une quelconque des revendications précédentes, dans lequel au moins un réceptacle de pot (8) et notamment tous les réceptacles de pot (8)
- a/ont une forme ronde, ou
- a/ont une forme carrée, ou
- a/ont une forme rectangulaire.

10. Support de pots de plantes selon l'une quelconque des revendications précédentes, dans lequel le support de pots de plantes comprend au moins un insert adaptateur annulaire (18) qui peut être inséré dans un réceptacle de pot (8), la circonférence extérieure de l'insert adaptateur étant adaptée à la taille du réceptacle de pot.

11. Support de pots de plantes selon l'une quelconque des revendications précédentes, dans lequel
- le corps de base est fabriqué en un métal, notamment en une tôle d'aluminium ; ET/OU dans lequel
- le corps de base est revêtu, et notamment comprend un revêtement en poudre ou un vernissage.

12. Support de pots de plantes selon l'une quelconque des revendications précédentes, dans lequel
- une paroi frontale (6) présente un bord supérieur s'étendant essentiellement horizontalement dans la position de fixation ; ET/OU dans lequel
- une ouverture de trop-plein (10) est agencée sur au moins une paroi frontale (6) ; ET/OU dans lequel
- les parois frontales (6) sont reliées à la paroi inférieure (4), à la paroi avant (5) et éventuellement à la deuxième baguette (15) de manière étanche aux liquides, notamment par soudage.

13. Support de pots de plantes selon l'une quelconque des revendications précédentes, dans lequel le support de pots de plantes présente au moins un réservoir d'eau (22) .

14. Support de pots de plantes selon l'une quelconque des revendications précédentes, dans lequel le support de pots de plantes présente au moins une paroi intermédiaire qui divise notamment le bac (9) dans la direction longitudinale.

15. Support de pots de plantes selon l'une quelconque des revendications précédentes, dans lequel une paroi intermédiaire est agencée entre deux réceptacles de pots (8) dans la direction longitudinale du support de pots de plantes (1).
